# EUROPEAN PATENT APPLICATION

(11) **EP 4 749 341 A2**
(43) Date of publication of application: **27.05.2026**
(21) Application number: 25218177.1
(22) Date of filing: 25.11.2025
(51) Int. Cl.: G02B 6/30, G02B 6/12, G02B 6/13, G02B 6/136

(54) **EDGE OPTICAL COUPLER**

(30) Priority: 26.11.2024 US 202418960014
(71) Applicant: Nokia Solutions and Networks Oy, 02610 Espoo (FI)
(72) Inventor: DUTTA, Subhojit, San Jose, CA (US); MARININS, Aleksandrs, Santa Clara, CA (US); VAN NIEKERK, Matthew, Rochester, NJ (US); GE, Xiaochen, West Windsor, NJ (US); MISTRY, Ajay, New York, NY (US)
(74) Representative: Nokia EPO representatives

(57) **Abstract**

A photonic integrated circuit (PIC) includes an optical edge coupler configured to optically couple the PIC to an optical fiber. The edge optical coupler comprises an optical waveguide core that is at least 2 microns thick and is disposed over a first cladding layer configured to guide light of an operating wavelength of the PIC in the optical waveguide core. The optical waveguide core and the first cladding layer have a low refractive index difference therebetween to form a weakly guiding waveguide. In an example implementation, the PIC is silicon-based, and both the cladding and the optical core of the edge optical coupler include a silicon oxide material.

## Description

### TECHNICAL FIELD

The present invention relates to integrated photonic circuits and elements thereof.

### BACKGROUND

Optical communication devices often include silicon photonic chips implementing photonic integrated circuits (PIC), which receive or transmit light signals using optical fibers. Within a PIC, light is routed using planar optical waveguides. Optical cores of these planar optical waveguides typically have a relatively large refractive index contrast with surrounding cladding material, and an approximately rectangular cross-section that is about or less than half a micron in height. Such waveguides often support a single guided optical mode that is typically well confined within the optical core of the waveguide at the wavelength of device operation. On the other hand, a typical single-mode optical fiber has an approximately cylindrical core with a diameter of several microns, and a low index contrast with surrounding cladding. In order to efficiently couple light between a PIC and an optical fiber, PICs may include optical mode converters to approximately match an optical mode at an input or output of the PIC to the optical mode of the optical fiber. In PICs with optical coupling via an edge of the photonic chip ("edge optical coupling"), such mode converters typically include inverse tapered waveguides and/or two-dimensional nano-patterned arrays of optical cores configured to increase the size of the optical mode at an edge of the photonic chip.

### SUMMARY OF THE INVENTION

Ideally, an edge optical coupler of a photonic chip should support an optical mode having a mode field diameter (MFD) that matches that of the guided mode of the optical fiber to which the photonic chip is to be coupled, and symmetry that facilitates about equal coupling efficiency for both TE and TM polarizations of light in the photonic chip. This may not be trivial to achieve reliably and reproducibly using either inverse tapered waveguides or nano-patterned arrays of optical cores at an edge of a photonic chip. Indeed, obtaining a symmetric optical mode for both the TE and TM polarizations for optical couplers with nano-patterned core arrays may be difficult because the widths and heights of the optical cores of such arrays are typically controlled by different process constraints. Edge optical couplers with mode conversion via inverse waveguide tapers typically require tapering the waveguides to very narrow widths, e.g. on the order of 200 nanometers (nm). Such a small feature size may be difficult to reliably reproduce using conventional CMOS wafer processing, leading to a large variability of coupling efficiency for such couplers. Furthermore, in photonic chips based on silicon-on-insulator (SOI) substrates, the enlarged optical mode of edge optical couplers with inverse waveguide tapering may be prone to radiation loss into the silicon handle. Mitigating this radiation loss by, e.g., using a thicker buried oxide (BOX) or undercutting the silicon handle introduces additional manufacturing complexity.

Some embodiments described herein may overcome some of the above-mentioned shortcomings of prior art by utilizing an optical waveguide in an edge optical coupler of a photonic chip having an oversized, approximately symmetrical optical core with a low core-cladding refractive index contrast that may approximate that of a typical single-mode optical fiber.

Accordingly, some of the examples described in the present disclosure relate to an apparatus comprising an edge optical coupler configured to optically couple a photonic chip to an optical fiber. The edge optical coupler is integrated with the photonic chip and comprises an optical waveguide core disposed over a first cladding layer and configured to guide light of an operating wavelength of the PIC along the optical waveguide core. The edge optical coupler has a low refractive difference between the optical waveguide core and the first cladding layer at the operating wavelength of the PIC.

In some implementations, the optical waveguide core and the cladding layer comprise a same dielectric material.

In some implementations, the optical waveguide core and the cladding layer comprise an oxide material.

In some implementations, the refractive index difference between the optical waveguide core and the cladding layer is less than 0.1. In some implementations, the refractive index difference between the first cladding layer and the optical waveguide core is in a range from 0.01 to 0.001.

In any of the above implementations, the optical waveguide core may have a height in a direction perpendicular to the first cladding layer greater than the operating wavelength of the photonic chip. In any of the above implementations, the optical waveguide core may be at least 2 microns (µm) in height. In any of the above implementations, the optical waveguide core may have a height in a range from about 2 microns to about 15 microns.

Any of the above implementations may comprise a second cladding layer disposed over the optical waveguide core.

In any of the above implementations, the photonic chip may comprise a planar substrate, one or more optical devices disposed along the planar substrate, and the optical edge coupler optically connected to the one or more optical devices. In some of such implementations, the photonic chip may comprise a layer of insulating material disposed over the substrate, and a semiconductor layer disposed over the insulating layer in a part of the photonic chip absent the optical edge coupler. The first cladding layer may be disposed upon the insulating layer. In some of such implementations, the semiconductor layer may be a silicon layer. In some of such implementations, the first cladding layer and the optical core may comprise an oxide of silicon. In some of such implementations, the refractive index difference between the first cladding layer and the optical waveguide core may be in a range from 0.1 to 0.001.

In any of the above implementations, the first cladding layer may comprise silicon dioxide, and the optical waveguide core may comprise one of silicon dioxide and silicon oxynitride. In some of such implementations, a second cladding layer may be disposed over the optical waveguide core. The second cladding layer may comprise, e.g., one of silicon dioxide and optical epoxy.

A related aspect of the present disclosure provides an apparatus comprising a photonic integrated circuit (PIC). The PIC comprises one or more optical devices and an edge optical coupler configured to optically couple to an optical fiber. The edge optical coupler comprises an optical waveguide core disposed over a first cladding layer configured to guide light of an operating wavelength of the PIC along the optical waveguide core. The optical waveguide core and the first cladding layer are configured to have a low refractive index difference therebetween at the operating wavelength of the PIC. In some implementations, both the optical waveguide core and the first cladding material may comprise an oxide.

A related aspect of the present disclosure provides a method. The method comprises fabricating an edge optical coupler in a chip-edge portion of a photonic chip wafer. The fabricating comprises disposing a higher-index optical core layer over a lower-index optical cladding layer, such that a difference in refractive index between the higher-index core layer and the lower-index cladding layer is less than 0.1.

In some implementations, the fabricating comprises disposing a higher-index optical core layer over a first lower-index cladding layer in a chip-edge portion of a photonic chip wafer, the higher-index optical core layer and the first lower-index cladding layer comprising a same dielectric material; and etching the core layer to form an optical waveguide core of the optical waveguide of the edge optical coupler of a photonic chip.

In some implementations, disposing each of the higher-index optical core layer and the lower-index optical cladding layer comprises depositing a silicon oxide comprising material. Some implementations may comprise depositing the silicon oxide comprising material of the optical core layer to a thickness of at least 2 microns.

In any of the above implementations of the method, the disposing may comprise depositing the silicon oxide comprising material using one of PECVD and LPCVD and adjusting deposition parameters for the optical core layer such as to increase a refractive index of the silicon oxide comprising material being deposited.

In any of the above implementations of the method, the photonic chip wafer may comprise a waveguiding device layer disposed over a buried oxide (BOX) layer, the method comprising removing the waveguiding device layer to expose the BOX layer in the chip-edge portion of the wafer.

### BRIEF DESCRIPTION OF THE DRAWINGS

Exemplary embodiments will be described below in greater detail with reference to the accompanying drawings, which may not be to scale, and wherein:
FIG. 1 is a schematic plan view of a photonic chip including an edge optical coupler (EOC) according to an embodiment of the present disclosure;
FIG. 2 is a schematic front view of the edge optical coupler of the photonic chip of FIG. 1;
FIG. 3 schematically illustrates a partial longitudinal cross-section of the photonic chip of FIG. 1 coupled to an optical fiber;
FIG. 4A schematically illustrates a partial longitudinal cross-section of a photonic chip showing an example layer structure of the edge optical coupler extending in a device portion of the chip;
FIG. 4B is a schematic plan view of a vertical optical coupler for coupling the edge optical coupler of FIG. 4A to a connecting optical waveguide of the photonic chip;
FIGs. 5A-5F are schematic cross-sectional views of an example edge optical coupler of a photonic chip at different fabrication stages thereof according to an embodiment;
FIGs. 5G and 5H are schematic front views of two different versions of an edge optical coupler of a photonic chip with an optical epoxy as a top cladding;
FIG. 6 is a schematic plan view of a photonic chip wafer wherein a plurality of photonic chips having edge optical couplers is defined;
FIG. 7 is a graph illustrating an example refractive index profile of a graded-core EOC according to an embodiment.

### DETAILED DESCRIPTION

While the present teachings are described in conjunction with various embodiments and examples, it is not intended that the present teachings be limited to such embodiments. On the contrary, the present teachings encompass various alternatives and equivalents, as will be appreciated by those of skill in the art. All statements herein reciting principles, aspects, and embodiments, as well as specific examples, are intended to encompass both structural and functional equivalents thereof. Additionally, it is intended that such equivalents include both currently known equivalents as well as equivalents developed in the future, i.e., any elements developed that perform the same function, regardless of structure.

Note that as used herein, the terms "first", "second", and so forth are not intended to imply sequential ordering, but rather are intended to distinguish one element from another, unless explicitly stated. Similarly, sequential ordering of method steps does not imply a requirement of sequential order of their execution, unless explicitly stated. The phrase "such as", when preceded by a comma ("... , such as ..."), means that the nouns introduced by "such as" must be understood as examples, not as definitions. In other words, the phrase "such as", when preceded by a comma, is synonymous with "e.g." or "for example". The term "vertical" refers to a direction generally perpendicular to a main surface of a substrate along which relevant integrated circuitry is disposed. The term "horizontal" refers to a direction along the surface of the substrate. The terms "above" and "below" refer to a greater or smaller distance from a substrate of a chip being described, respectively, and are not related to an orientation of the chip in space. I.e., a layer that is farther away from the substrate than some other layer is said to be above that other layer. Conversely, a layer that is closer to the substrate than some other layer is said to be below that other layer. Similarly, the terms "vertical" and "horizontal" refer to directions perpendicular to a substrate of a chip being described and along the substrate, respectively, and are not related to an orientation of the chip in space.

As used herein, the terms "light" and "optical," and similar terms, refer to electromagnetic radiation that is not restricted to the visible range. Examples of edge optical couplers described herein may operate at wavelength of light in any of the wavelength ranges typically used for telecommunications, including the so-called 1300 nm band, the S-band (1460-1530 nm), the C-band (1530-1565 nm), and the L-band (1565-1625 nm) of the infrared optical communications.

Furthermore, the following abbreviations and acronyms may be used in the present document:
"CMOS" Complementary Metal-Oxide-Semiconductor
"EO" Electro-Optical
   "Si" Silicon
"SiO₂" Silicon dioxide
"SiO_{X}N_{Y}" Silicon oxynitride
"PIC" Photonic Integrated Circuit
   "SOI" Silicon on Insulator
   "SiP" Silicon Photonics
"MZM" Mach-Zehnder Modulator
"LPCVD" Low-Pressure Chemical Vapor Deposition
"PECVD" Plasma Enhanced Chemical Vapor Deposition
"RI" Refractive index
"TE" Transverse Electric (mode)
"TM" Transverse Magnetic (mode)

Example embodiments described herein relate to an edge optical coupler (EOC) comprising an optical waveguide having an optical waveguide core ("EOC core") disposed along a planar main surface of a substrate. The term "main plane" of an object, such as, e.g., a substrate, a PIC, or a chip, is a plane parallel to a substantially planar surface thereof that has about the largest area among exterior surfaces of the object; this substantially planar surface may be referred to as a main surface. Here "substantially planar" or "planar" may encompass slightly bent substrates or surfaces, when a bending-related vertical displacement across the waveguide's width is smaller than a characteristic size of the waveguide in the direction of the displacement. Exterior surfaces of the object, e.g., a chip, that have one relatively large size, e.g., length or width, but are of much smaller area, e.g., less than one third of the area of the main surface, are typically referred to as the edges of the object. In edge optical coupling, the light being coupled in or out of the chip or PIC may propagate substantially parallel to the main surface of the PIC, or typically within +\-10° off parallel, as it enters or exits the PIC through the edge thereof.

At least some of the example EOCs described below are configured to optically couple a PIC, typically implemented in a photonic chip, to an optical fiber. A typical optical fiber has a cylindrical symmetry, with both an optical core and the surrounding cladding formed of silica, i.e. silicon dioxide (SiO₂). The silica in the core of the optical fiber is suitably doped to increase its refractive index (RI), forming a cylindrical waveguide with a low core-cladding index contrast. Here, "core-cladding index contrast" means the difference Δ*n* = (*n*_{core}-*n*_{clad}) between the refractive index (RI) *n*_{core} in the optical core of a waveguide and the refractive index *n*_{clad} in the cladding of the waveguide. The term "low core-cladding index contrast" means Δ*n* <1·10⁻¹. In a typical single-mode optical fiber, the core-cladding index contrast Δ*n* is about 5·10⁻³, and a core diameter is typically in the 5 to 10 micrometers (µm) range. Note that the term "core-cladding index contrast" as used herein do not presume an abrupt change of the RI at a core-cladding boundary; in the context of this specification this RI change may be gradual, e.g. occurring on a scale comparable to the operating wavelength λ of the corresponding device in the core or cladding material. For such "graded-index" waveguides, the RI in the optical core *n*_{core} as used herein is a maximum RI value of the optical core layer, typically in the middle portion thereof, and the "core-cladding index contrast" or "core-cladding index difference" is the difference between the RI in the bulk of the cladding layer and the maximum RI in the optical core layer.

Contrary to optical fibers, optical waveguides of a PIC are typically planar, with the optical core of the waveguide having a rectangular cross-section with a sub-wavelength (typically sub-micron) height, a width from a few hundred nanometers (nm) to a few microns, and a relatively large core-cladding index contrast, which is typically greater than 0.3 at least in the layer growth (i.e., "vertical") direction. For example, optical waveguides in silicon photonics (SiP) typically use silicon (Si) (RI ~ 3.5, λ ~ 1550nm) or silicon nitride (Si₃N₄) (RI ~ 2, λ ~ 1550nm) in the optical core of the waveguide, and silicon dioxide (SiO₂) (RI ~ 1.45, λ = 1550nm) in the cladding, resulting in the core-cladding index contrast ranging from about 2 for Si/SiO₂ waveguides to about 0.5 for Si₃N₄/SiO₂ waveguides. The height of the optical core, e.g. the thickness of a corresponding layer where the core is formed, is typically limited by the inherent stress in the heterogenous material stack and/or a preference for single-mode operation. For single-mode operation, the large core-cladding contrast typically necessities the height of the core being smaller than the wavelength λ ("sub-wavelength"). The fundamental guided mode of such waveguides typically has different mode profiles in the vertical (i.e. normal to the plane of the layers of the chip) and horizontal (along the plane of the layers) directions. The mode profiles in such waveguides are typically also polarization-dependent, i.e. differ for the TE and TM modes of the waveguide. Accordingly, edge optical couplers based on such high index contrast waveguides of sub-micron height require the use of such mode converters as waveguide tapers and nano-patterned core arrays to increase the size of the mode and make it more symmetrical at the edge of the chip, typically in the form of 2D core nano-patterning and/or inverse core tapering.

Contrary to that, example EOCs described herein have a low core-cladding index contrast, i.e. Δ*n* at the target wavelength of operation λ in a range from about 1·10⁻¹ to about 5·10⁻⁴ , or in a range from 1·10⁻² to 1·10⁻³ typically, e.g. in the 4·10⁻³ to 8·10⁻³ range in some example implementations. This small index contrast allows for the optical waveguide to support a single transverse mode while having a relatively large size of the optical core. In the example EOCs described below, the height of the optical core of the EOC may be greater than the operating wavelength λ_{c} in the material of the optical core, e.g. in the 2λ_{c} -15λ_{c} range, or in the 2 to 15 µm range for λ in the 1.3-1.6 µm range. Here, λ_{c} = λ/n₁, where n₁ is the RI in the optical core of the EOC. In some example implementations, the core-cladding index contrast and the size of the optical core of the EOC waveguide may approximately match those of an optical fiber to which the EOC is to be optically coupled. In at least some of the examples described below, both the relatively large height of the optical core and the low core-cladding index contrast are facilitated by using a substantially same dielectric material, e.g. silicon based, in both the core and a cladding of the EOC, and configuring said dielectric material to have a slightly greater refractive index in the core than in the cladding. Layers comprising substantially the same dielectric material may have different RI due to, e.g., different density, different doping material, or small variations in material composition.

In at least some of the examples described below, the core and the cladding of the EOC comprise an oxide of silicon, e.g. silicon dioxide (SiO₂) that is configured to have different density and/or different doping in the cladding and in the core, or silicon oxynitride (SiO_{X}N_{Y}) with a nitrogen (N) to oxygen (O) ratio, N:O, sufficiently low to allow a layer thickness in the, e.g., 3 to 10 µm range with low mechanical stress in a SOI platform. The ratio of silicon (Si) to oxygen (O) atoms in a layer of silicon dioxide SiO₂ may also slightly differ from 1:2 due to different deposition conditions of the layer, which may result in a slightly different RI of the layer.

In some implementations, the oxide in the optical core may be doped, e.g. during layer deposition or by a post-deposition ion implantation, to increase the refractive index thereof. E.g., the silicon dioxide of the optical core of an EOC may be doped with germanium (Ge), Nitrogen (N), or aluminum (Al) to increase the refractive index of the SiO₂. It some implementations, the silicon dioxide in the cladding of the EOC may be doped with, e.g., boron (B) or fluorine (F) to decrease the RI of the SiO₂. It some implementations, the oxide of the cladding may be deposited at different deposition conditions than the oxide of the optical core of the EOC to have a greater RI in the core than in the cladding of the EOC. E.g., the refractive index (RI) of Plasma Enhanced Chemical Vapor Deposition (PECVD) oxide can range from about 1.45 to about 1.47, depending on such deposition parameters as, e.g., RF power, pressure, temperature, and precursor flow. In some implementations, the oxide of the optical core may include nitrogen (N) to form silicon oxynitride.

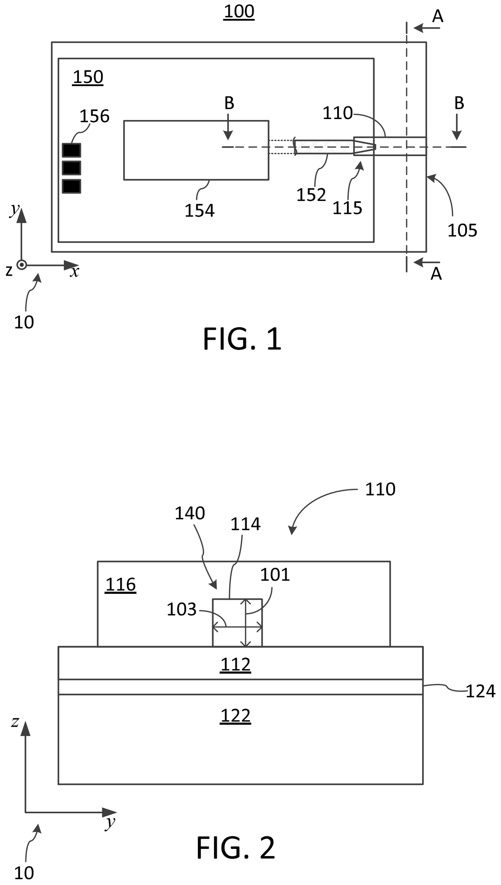

FIG. 1 schematically illustrates a layout of an example PIC implemented with a photonic chip 100 according to an embodiment. The photonic chip 100 includes a device portion 150 and an edge optical coupler (EOC) 110. The device portion 150 of the chip comprises one or more optical devices 154 and may also comprise one or more electrical contact pads 156. The EOC 110 extends into the photonic chip 100 from an edge 105, e.g. an approximately vertical side surface or facet of the chip 100, and serves as an input and/or output optical port of the chip. The one or more optical devices 154 in the device portion 150 of the chip may be any optical and/or opto-electronic integrated devices configured to guide and process light signals, such as, without limitation, optical waveguides, optical couplers, optical splitters, polarization converters, polarization combiners, polarization splitters, Mach-Zehnder Interferometers (MZIs), Mach-Zehnder Modulators (MZMs), other optical modulators and/or interferometric structures, optical attenuators, photodetectors (PDs), etc. An optical waveguide 152 formed in the photonic chip 100 optically couples the EOC 110 to the one or more optical devices 154 and may be referred to herein as the connecting optical waveguide 152. An optical coupler 115 may be provided to optically couple the EOC 110 to the connecting optical waveguide 152.

FIG. 1 shows the layout of the photonic chip 100 in a plane that is parallel to a main surface of the photonic chip 100 along which different devices and waveguides are disposed. In the following description, this plane corresponds to an (X,Y) plane of a Cartesian coordinate system (X,Y,Z) 10. The direction of light propagation in the EOC 110 corresponds to the X-axis of the coordinate system 10 and may be referred to as the longitudinal direction or the longitudinal dimension. The Z-axis may be normal to the main plane of the chip, and a corresponding direction or dimension may be referred to as the vertical direction or the transverse direction. The direction along the Y-axis, i.e. in the plane of a main surface of the photonic chip 100 and perpendicular to the longitudinal direction (axis X) of the EOC 110, may be referred to as the lateral direction. Note that the terms "vertical" and "horizontal" as used herein refer to directions relative to a photonic chip or PIC being described and do not relate to any particular orientation of the chip in space.

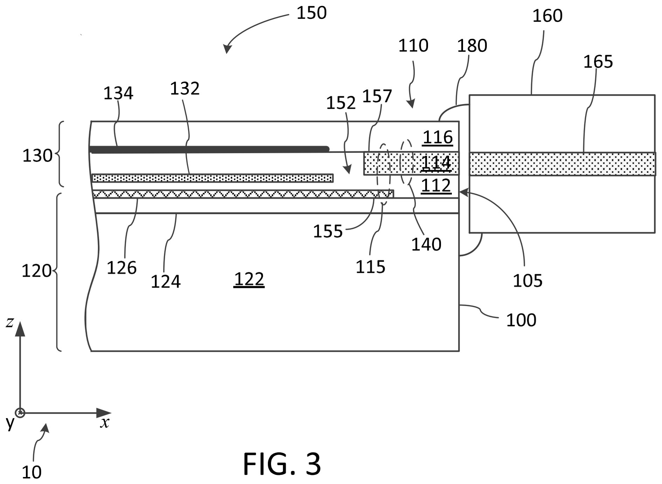

FIGs. 2 and 3 schematically illustrate partial cross-sections of an example implementation of the photonic chip 100 that may be based on a silicon-on-insulator (SOI) platform. FIG. 2 shows a vertical cross-section through the EOC 110 along the line "A-A" indicated in FIG. 1, i.e. a cross-section of the EOC 110 in a plane that is perpendicular to the direction of light propagation in the EOC 110, i.e. in an *(Y,* Z) plane of the coordinate system 10. FIG. 3 shows a vertical cross-section through the EOC 110 along the line "B-B" indicated in FIG. 1, i.e. a cross-section of the EOC 110 in a vertical plane *(X,* Z) along the direction of light propagation in the EOC 110. In the example illustrated in FIG. 3, the photonic chip 100 includes an SOI substrate 120 comprised of the silicon handle substrate 122, which is typically planar, a buried oxide (BOX) layer 124, and a device layer 126, e.g., a semiconductor layer, which may be absent in the EOC portion of the chip. In a SOI implementation, the device layer 126 is typically a silicon layer. The EOC 110 includes an optical waveguide core 114 ("optical core 114") located between a first optical cladding layer 112 ("first cladding 112") and a second optical cladding layer 116 ("top cladding 116"). The optical core 114 of the EOC 110 may terminate at the edge 105 of the chip 100 (FIG. 3) to form an optical port for coupling to an end of an optical fiber 160. In a final assembly, the optical core 114 of the EOC 110 may be aligned with an optical core 165 of the optical fiber 160. The optical fiber 160 may be optionally glued to the chip 100 using, e.g., optical epoxy 180.

The first optical cladding layer 112 of the EOC 110 may be disposed over the BOX layer 124, e.g. directly upon the BOX layer 124, or may include the BOX layer 124. By way of example but without limitation, each of the BOX layer 124 and the first cladding layer 112 may be 1 to 5 µm thick. In some implementations, the BOX layer 124 may be used as the first cladding layer 112 of the EOC 110. In the embodiment illustrated in FIG. 3, the photonic chip 100 further includes a layer stack 130 that may be useful in the one or more optical devices 154. The layer stack 130 may include, e.g., one or more light guiding layers 132 and one or more metallization layers 134, which may be separated by insulting, e.g., oxide, layers. The one or more light guiding layers 132 may be comprised of a material or materials with an index of refraction higher than the surrounding cladding, e.g. oxide, layers; examples of such materials include, but are not limited to, silicon, silicon nitride, polysilicon, silicon oxynitride, aluminum oxide, silicon-germanium, and germanium.

In example implementations, the optical core 114 and at least the first cladding 112 of the EOC 110 comprise variants of the same dielectric material having slightly different refraction indices in the core 114 and in the first cladding 112, so as to form a weakly-guiding optical waveguide 140. The optical waveguide 140 has a small positive refractive index contrast Δ*n* = *(nₗ- n₂)<0.1* between the refractive index n₂ of the first cladding 112 and the refractive index *n*₁ of the optical core 114 at an operating wavelength λ of the photonic chip 100. In an example implementation, the core-cladding index contrast Δ*n* of the EOC 110 may be in the 0.01 to 0.001 range. Due to the small core-cladding index contrast Δ*n* and the material similarity between the optical core 114 and the first optical cladding 112, the optical core 114 may have a relatively large height 101 (FIG. 2), e.g. greater than the operating wavelength λ, without causing undesirable level of material stress in the structure while supporting a single transverse optical mode.

In one example implementation, the EOC 110 comprises a silicon dioxide in both the first cladding 112 and the optical core 114, with the silicon dioxide of the core 114 having a greater RI than the silicon dioxide of the first cladding 112. In another example implementation, the EOC 110 may comprise silicon oxynitride SiON in the optical core 114, e.g., with a low nitrogen (N) content, e.g. the N:O ratio less than 1:3, or about or less than 1:10 in some cases.

It some implementations, the material of the first cladding 112 may be deposited at different conditions than the material of the optical core 114 of the EOC 110 to have a greater RI in the core than in the cladding of the EOC. E.g., in one implementation the optical core 114 may be formed using Plasma Enhanced Chemical Vapor Deposition (PECVD) of an oxide of silicon, with one or more PECVD parameters, such as RF power, pressure, temperature, and precursor flow, being adjusted to increase the RI of the resulting oxide relative to that of the first cladding 112, e.g. to an RI value in a range from about 1.45 to about 1.47. In some implementations, the oxide in the optical core 114 may be doped, e.g. with Ge, N, or Al, to increase the refractive index thereof. It some implementations, the oxide (e.g. silica) in the first cladding 112 of the EOC 110 may be doped with, e.g., boron (B) or fluorine (F), to decrease the RI thereof.

Advantageously, using two different variants of an oxide material having slightly different RIs for the core and cladding facilitates a configuration of the EOC 110 with a large core size (> 1) and a low core-cladding index contrast (An <0.1) that may be similar to those of the optical fiber 160, thereby enabling efficient optical coupling between the optical fiber 160 and the EOC 110 with a low polarization-dependent loss (PDL). The RI contrast Δ*n* between the oxide in the optical core 114 and in the cladding 112, and the cross-sectional size of the optical core 114, e.g. the height 101 and the width 103 thereof, may be configured such that the MFD of a fundamental optical mode supported by the EOC 110 approximately matches the MFD of a fundamental optical mode of the optical fiber 160 for each of the TE and TM modes of the optical waveguide 140 of the EOC 110. Here the height 101 is the size of the optical core 114 in a direction perpendicular to the substrate 122 (Z-axis in FIG.3), and the width 103 is the size thereof in a direction (lateral, Y-axis) along the substrate 122 and perpendicular to the direction of light propagation in the optical core 114.

In the example illustrated in FIG. 2, the optical core 114 has an approximately rectangular cross-section with the height h 101 and the width w 103 both exceeding the λ. By way of example, both the height 101 and the width 103 of the optical core 114 may be in a range of 2 to 15 µm, e.g. in a 3 to 10 µm range for some typical implementations, for embodiments with the operating wavelengths λ in a range from about 1.3 to about 1.6 µm, e.g. ~ 1.55 µm. The oxide in the optical core 114 and the first cladding 112 may be configured so that the core-cladding index contrast Δ*n* of the EOC 110 approximately matches the core-cladding index contrast of the optical fiber 160. By way of example, at λ~1.55µm the refractive index n₂ of the silicon dioxide of the first cladding 112 may be about 1.445, and the silicon dioxide of the optical core 114 may have a slightly higher refractive index *n*₁ = (*n*₂ *+* Δ*n*), with the core-cladding index contrast Δ*n* being in a 0.01 to about 0.001 range, e.g. from about 0.004 to about 0.008.

In some implementations, the upper cladding 116 of the EOC 110 may also be formed with the same material as the first cladding layer 112, e.g. silicon dioxide, and may have approximately the same RI n₂ as the first cladding layer 112. In some implementations, the upper cladding layer 116 may be absent, and the upper surface of the optical core 114 may be exposed, e.g., to air. In some implementations, the upper cladding layer 116 may comprise an optical material that is different from silicon dioxide, such as, e.g., optical epoxy having a lower index of refraction than the optical core 114 of the EOC 110, e.g. approximating the RI of the first cladding 112. In some implementations, one or more other layers may be present above the top cladding layer 116.

In some implementations, the device, e.g. silicon, layer 126 (FIG. 3) may serve as a light-guiding and light-processing layer in the device portion of the chip 100. In the example illustrated in FIG. 3, the silicon layer 126 includes an optical core of the connecting waveguide 152, with an end portion 155 thereof being disposed directly below an end portion 157 of the optical core 114 of the EOC 110 and being evanescently optically coupled thereto to form a vertical optical coupler 115.

FIG. 3 illustrates just one example of the optical chip 100, and other implementations may have different layer structures in both the EOC and device portions of the chip. For example, in some implementations the higher-index oxide material of the optical core 114 may extend into the device portion of the photonic chip 100, e.g. as a spacer layer, rather than being localized within the EOC portion of the photonic chip 100. In some implementations, the optical core 114 of the EOC 110 may be coupled to a connecting waveguide located elsewhere in the layer stack 130.

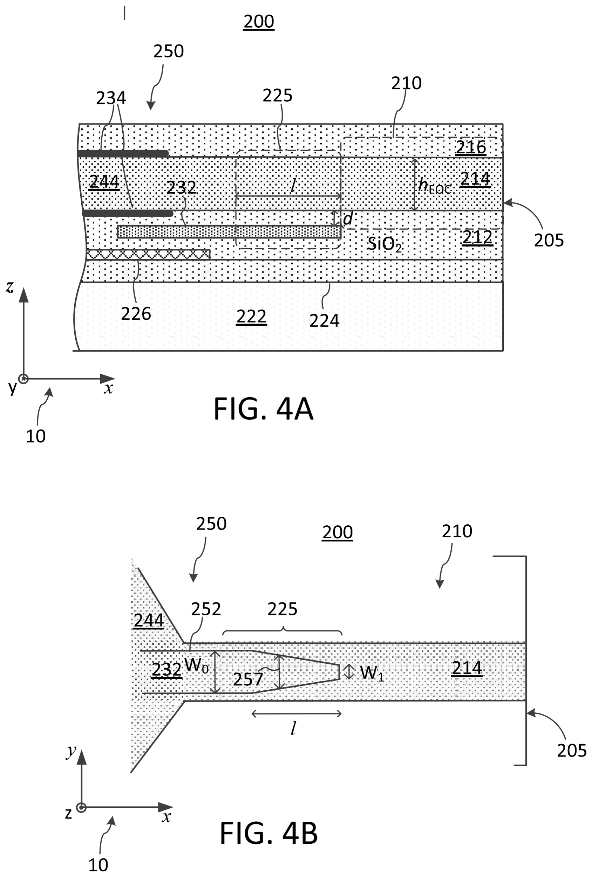

FIG. 4A schematically illustrates selected layers of a photonic chip 200 according to another example, the photonic chip 200 including an EOC 210. A partial vertical cross-section of an edge portion of the photonic chip 200 along a length of the EOC 210 is shown. The EOC 210 terminates at an edge 205 of the photonic chip 200 for coupling to an external optical waveguide, typically an optical fiber. The photonic chip 200 and the EOC 210 may be variants of the photonic chip 100 and the EOC 110, respectively, with a somewhat different layer structure at least in the device portion of the chip. Similarly to the photonic chip 100 of FIG. 3, the photonic chip 200 may be based on a SOI platform and may include a handle substrate 222, a device layer 226, and an insulating, e.g., BOX, layer 224 separating the device layer 226 from the handle substrate 222. The device layer 226 is typically a silicon layer. The BOX layer 224 is typically a 1 to 10 µm thick layer of silicon dioxide, which may be obtained, e.g., by thermal oxidization of a silicon substrate, e.g. 222 ("thermal oxide"). The EOC 210 includes a first cladding layer 212, e.g. up to 5 µm thick typically, that is disposed over the BOX layer 224, an optical core 214 disposed over the first cladding 212, and a top cladding 216. The first cladding layer 212, the optical core 214, and the top cladding layer 216 may be examples of the first cladding layer 112, the optical core 114, and the top cladding layer 116 described above.

**In** an example implementation, the first cladding layer 212 may comprise a lower-index silicon dioxide, and the optical core 114 may comprise a higher-index oxide of silicon, e.g. a higher-index SiO2 or a silicon oxynitride, with an RI contrast therebetween Δ*n* < 0.1, typically in the 0.01 and 0.001 range. The height h_{EOC} of the optical core 214 may be, e.g., in a range from 2 to 15 µm, 3-10 µm typically.

**In** the example shown in FIG. 4A, the higher-index oxide of the optical core 214 extends into a device portion 250 of the photonic chip 200 where it may form an insulating spacing layer 244 separating, e.g., two metallization layers 234. In other implementations of the photonic chip 200, the higher-index oxide of the optical core 214 may cap a top metallization layer in parts of the photonic chip 200 or may be a spacing layer separating a waveguiding layer of the photonic chip from a metallization layer. In at least some implementations, the higher-index oxide of the optical core 214 of the EOC 210 may be deposited at the back-end metallization stage of wafer processing after forming silicon and/or silicon nitride optical device structures in the device portion 250 of the chip, and may extend into the device portion 250 of the chip, e.g., as the spacer 244, as described above.

**In** some implementations the EOC 210 may be optically coupled to a connecting waveguide 252 (FIG. 4B) having a waveguide core 232 located in a plane between the silicon layer 226 and the optical core 214 of the EOC 210. The connecting optical waveguide 252 optically connects the EOC 210 to one or more devices (not shown) located in the device portion 250 of the photonic chip 200 and is an example of the connecting optical waveguide 152 of FIG. 1. The connecting waveguide 252 may be vertically optically coupled to the silicon layer 226. Light propagating in the silicon layer 226 may be coupled into the EOC 210 and out of the chip 200 via the connecting waveguide 252. Alternatively, light received in the optical core 214 of the EOC 210 via the chip edge 205 may be coupled into the silicon layer 226 via the connecting waveguide 252. The waveguiding core 232 may be formed, e.g., in a layer of silicon, silicon nitride, silicon oxynitride, aluminum oxide, or other suitable optical waveguiding material, and may be separated from the silicon layer 226 and the optical core 214 of the EOC 210 by a suitable cladding material, e.g., a lower-index silicon dioxide.

FIG. 4B illustrates, in a plan view, an example optical coupling arrangement between the optical core 214 of the EOC 210 and the waveguiding core 232 of the connecting optical waveguide 252. The optical core 214 of the EOC 210 and the core 232 of the connecting waveguide 252 are disposed in different layers of the photonic chip 200, and are separated by a cladding material, e.g. lower-index SiO₂, of thickness *d.* The gap *d* between the optical waveguiding cores 232 and 214 should be sufficiently small to allow for evanescent optical coupling therebetween, e.g., in a range from 50 nm to 2000 nm. The end portion of the optical core 232 of the connecting waveguide 252 that is located directly below the optical core 214 of the EOC 210 may be tapered, i.e. has a width 257 that gradually decreases over a length *l* toward the end of the waveguide from a nominal width W₀ to a smaller width W₁, to form a vertical coupler 225. The end portion of the optical core 214 of the EOC 210 in the vertical coupler 225 may be non-tapered. Light coupled into the connecting optical waveguide 252 from the EOC 210 by the vertical coupler 225 will tend to stay within the connecting waveguide's optical core 232 due to a greater RI thereof, until it is coupled into the silicon layer 226. The coupling of light from the connecting optical waveguide 252 into the EOC 210 by the vertical coupler 225 may be facilitated by the tapering of the optical core 232 of the connecting waveguide and by the height of the optical core 214 of the EOC 210 (2-15µm) being greater than the height of the optical core 232 of the connecting waveguide 252.

By way of example, the optical core 214 of the EOC 210 may be formed of a higher-index silicon dioxide or silicon oxynitride having an RI, e.g., in a 1.445 to 1.46 range, while the waveguiding core 232 of the connecting optical waveguide 252 may be formed of silicon nitride, Si₃N₄, having an RI of about 2, tapering from, e.g., W₀ ≥1 µm to W₁ ~ 400±50 nm, with a lower-index silicon dioxide cladding therebetween. Advantageously, the greater height of the optical core 214 of the EOC 210 may make unnecessary tapering the core 232 of the connecting optical waveguide 252 to less than 350-450 nm, which is a feature size that may be reproducibly fabricated using conventional CMOS processing. The length *l* of the taper may be, e.g., in a 50 to 4000 µm range, depending on the spacing d between the optical core 214 of the EOC 210 and the optical core 232 of the connecting optical waveguide 252.

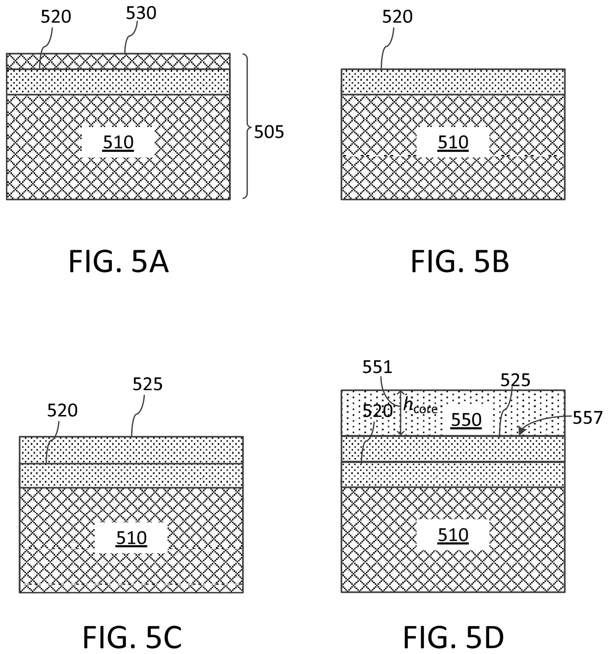

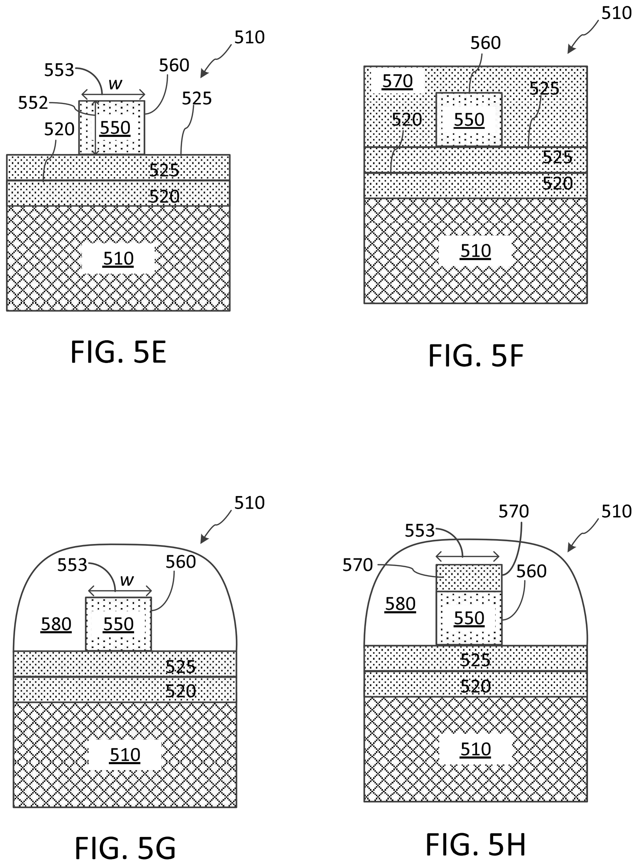

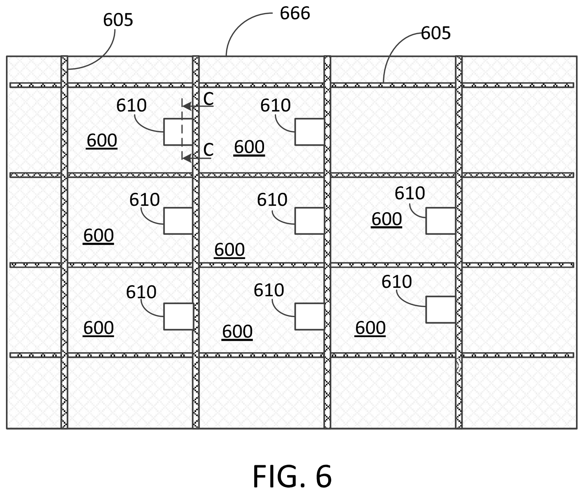

With reference to FIGs. 5A - 5H and 6, an example method for fabricating an EOC 510 having a low core-cladding index contrast and a core size suitable for coupling a photonic chip to an optical fiber is described below. The EOC fabrication may be performed at a wafer processing stage. FIG. 6 schematically illustrates an example layout of a photonic chip wafer 666 having a plurality of photonic chips 600. The photonic chips 600 are outlined by dicing lines 605, defining the location of chip edges. In at least some of the photonic chips 600, a chip-edge coupling area 610 may be defined where an EOC is to be fabricated. As described below by way of example, the processing of the wafer 666 may include depositing a core layer that is at least 2 µm thick and has a low RI contrast with a lower first cladding layer, and etching the core layer at least in the chip-edge coupling areas 610 of the photonic chip wafer 666 to form an optical waveguide core, e.g. 114 or 214, of the EOC. In some implementations, the core layer and the first cladding layer may comprise a variant of the same dielectric material, e.g. the same oxide, that is configured to have a slightly greater RI in the optical waveguide core that in the adjacent cladding(s), the cladding-core RI contrast being less than 0.1. In some implementations, the core layer and the first cladding layer comprise an oxide of silicon, and the process of depositing the core layer is performed such as to increase the RI of the core layer relative to the RI of the first cladding layer. In some implementations, the method may further include depositing a second cladding layer over the optical waveguide core of the EOC. In some implementations, the processing may include depositing a layer of higher-index oxide at a step of back-end metallization of the wafer, such that the layer is deposited directly over an exposed first cladding layer in the EOC portion of the chip(s) to form the EOC core, and extends into the device portion(s) of the chip(s) to serve as, e.g., a metallization or optical device spacer layer.

FIGs. 5A-5F schematically show partial vertical cross-sections of one of the chip-edge coupling areas 610 of the photonic chip wafer 666 at different stages of EOC fabrication for an example embodiment. The shown cross-sections are along a C-C line indicated in FIG. 6 by way of example. In the illustrated in FIGs. 5A-5F example, both the first cladding (e.g., 525, FIGs. 5C-5H) and the core (e.g. 560, FIGs. 5E-5H) of the EOC include an oxide of silicon, e.g. silicon dioxide (SiO₂) or low-nitrogen silicon oxynitride (SiO_{X}N_{Y}) in some embodiments, and the wafer 666 includes an SOI substrate 505 (FIG. 5A) having a BOX layer 520 disposed between a silicon handle substrate 510 and a silicon layer 530. It will be appreciated that processing of the wafer 666 typically includes more processing steps than those described below with reference to FIGs. 5A-5F, e.g. to fabricate various optical and opto-electronic devices integrated within the photonic chip and/or to prepare intermediate surfaces, and some of these processing steps may be performed between the example processing steps described below.

In an example implementation of the process being described, the EOC fabrication may include removing the silicon layer 530 in the chip-edge coupling area(s) 610 of the wafer, which may result in a structure, illustrated in FIG. 5B, having an exposed BOX layer 520. In some implementations, an additional layer 525 of lower-index oxide (e.g. SiO2) may then be disposed over the exposed BOX layer 520 to form a structure illustrated in FIG. 5C. The lower-index oxide layer 525 may be deposited, e.g., at a front-end wafer processing stage wherein silicon-based and silicon nitride base device structures are being patterned, e.g. after the silicon layer 530 is patterned to define one or more optical waveguides and to expose the BOX layer in the EOC portion of the chip. In some implementations, the lower-index oxide layer 525 may also extend into other areas of the photonic chip, e.g., where the one or more optical waveguide devices are being formed during the front-end wafer processing. In the device area of the chip, the layer 525 may be used, e.g., as a cladding or spacer layer. In the chip-edge coupling area(s) 610 of the wafer, the layer 525 may operate as a first cladding layer of the EOC being fabricated, either by itself or in combination with the BOX layer 520. In some implementations, the oxide of the BOX layer 520 and the added layer 525 may have approximately the same RI, e.g., ~1.44 to 1.45 at λ ~1550nm, or as typical for a thermal oxide. In some implementations, the oxide (e.g. SiO2) of the added cladding layer 525 may be doped with a doping material that decreases the refraction index of the oxide.

A relatively thick (*h*_{core}>1µm, e.g. 2-10 µm) core layer 550 of a higher-index oxide may then be deposited over the first cladding layer 525 to form a structure illustrated in FIG. 5D. In some implementations, the core layer 550 may be deposited at the back-end wafer processing stage when one or more metallization layers are formed. In some implementations, one or more parameters of the process of deposition of the core layer 550 may be adjusted so as to increase the RI of the oxide relative to that of the first cladding layer 525.

E.g., in some implementations both the first cladding layer 525 and the core layer 550 may be layers of a silicon dioxide material formed using PECVD ("PECVD oxide"); in some implementations, the use of LPCVD or other suitable oxide deposition techniques may also be envisioned. As known in the art, the RI of, e.g., a PECVD silicon oxide can range from about 1.45 to about 1.47, depending on such deposition parameters as, e.g., RF power, pressure, temperature, Si:O flow, and the presence and flow rate of various precursors, such as e.g. silane (SiH4), Tetraethyl Orthosilicate (TEOS), Dichlorosilane (SiH₂Cl₂), Nitrous Oxide (N₂O), Oxygen (O₂). Accordingly, in the process of deposition of the core layer 550 one or more of these or other relevant deposition parameters or precursors may be adjusted compared to the process of PECVD deposition of the first cladding layer 525 so as to increase the RI of the oxide in the core layer 550 and provide the desired core-cladding index contrast of 0.1 to 0.001.

In some implementations, the core layer 550 may be doped to increase the refractive index thereof. E.g., the core layer 550 may be a layer of silicon dioxide doped with germanium (Ge), or aluminum (Al), which typically increases the refractive index of SiO₂. In some implementations, the doping may be performed *in situ* during the layer deposition, e.g. using precursors such as, but not limited to, trimethylaluminum (Al(CH₃)₃) or dimethylaluminum hydride (Al(CH₃)₂H). In some implementations, the doping may be performed using ion implantation after forming the core layer 550. It some implementations, silicon dioxide in the cladding layer 525 of the EOC may be doped with, e.g., boron (B) or fluorine (F) to decrease the RI of the SiO₂.

**In** some implementations, the process of PECVD deposition of the core layer 550 may be adjusted, e.g. by adding a source of nitrogen (e.g. N₂O, NH₃, or other suitable precursor of nitrogen "N") to the flow, to form a layer of nitrogen-doped silica or silicon oxynitride SiO_{X}N_{Y}. The RI of SiO_{X}N_{Y} may range from the RI of pure silica (~1.444) to that of silicon nitride (~2), and can be adjusted, e.g., by tuning the N₂O flow. Accordingly, in some implementations forming the core layer 550 may include, e.g., PECVD deposition of silicon oxynitride with a flow of nitrogen precursor (e.g. N₂O) adjusted to provide the desired RI contrast of 0.1 to 0.001 relative to the first cladding layer 225 of lower-index silicon dioxide.

In an example implementation, one of the processes described above is tuned to provide the refractive index contrast between the core layer 550 and the cladding layer 525 that is a range between 0.1 and 0.0005, or preferably in a range from about 0.01 to about 0.001, or between about 0.004 and 0.008 in some cases. The thickness *h*ₑₒᵣₑ 551 of the core layer 550 in the chip-edge coupling area may be in the 2 to 15 µm range, or 3 to 10 µm in some example implementations.

The core layer 550 may be patterned and etched to a desired width w 553 (FIG. 5E) to define an optical core 560 of an EOC 510. The height 552 of the optical core 560 may be approximately equal to the thickness 551 of the optical core layer 550. In some implementations, the height 552 of the of the optical core 560 may slightly differ from the thickness 551 of the optical core layer 550, depending on the etch depth. The width w 553 of the core 560 may be approximately equal to the height 552 thereof or may somewhat differ therefrom.

In some implementations, a top cladding layer 570 of a suitable optical material may then be deposited over the optical core 560 to provide a second cladding for the optical core 560, e.g., to form a channel waveguide. In other implementations, the top cladding layer 570 may be deposited over the core layer 550 and then patterned and etched to define the desired lateral dimension (i.e. the width 553) of the optical core 560 of the EOC. The refractive index of the optical material of the top layer 570 is smaller than the refractive index of the core 560. Examples of the optical material suitable for the top layer 570 include, but are not limited to, lower-index silicon dioxide and optical epoxy. The optical material of the top layer 570 may be, e.g., silicon dioxide having an approximately same index contrast with the core layer 550 as the first cladding layer 525.

In some implementations, a conventional oxide facet etch process may be applied to the core layer 550 to define the desired lateral dimension (i.e. the width 553) of the optical core 560 of the EOC 510. In one implementation of the process, the core layer 550 may be partly exposed during the oxide facet etch to define the optical core width 553 simultaneously with defining the facet at the chip edge; in another implementation of the process, the oxide facet etch may be performed after depositing the top layer 570 to simultaneously define the optical core width 553. The resulting EOC structures, which are illustrated in FIGs. 5G and 5H respectively (EOC 510), may then be covered with an optical epoxy 580. In some implementations, the optical epoxy 580 may be applied to each photonic chip 600 after separating the chip 600 from the wafer 666. In some implementations, the optical epoxy 580 may be an example of optical epoxy 180, and may be applied to also fixedly attach an optical fiber end to the chip 600 in a position of optical alignment with the EOC 510.

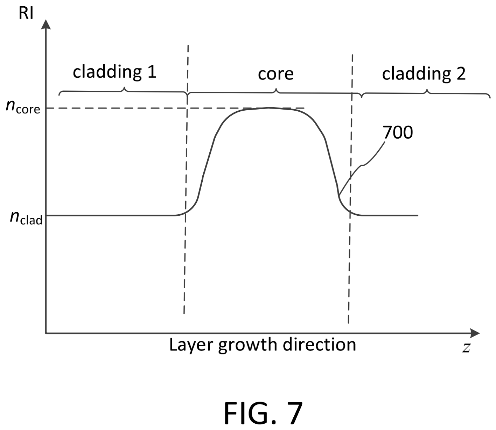

The foregoing description of example embodiments is not intended to be exhaustive or to limit the disclosure to the precise form described. Many modifications and variations are possible in light of the above teaching. For example, the added cladding layer 525 may be absent in some embodiments, e.g. when the underlying BOX layer is sufficiently thick so that substantially no light is leaked from the optical core of the EOC into the silicon handle substrate and the optical core of the EOC is at a level suitable for coupling to a connecting optical waveguide. Furthermore, in some implementations the first cladding layer of the EOC and/or the optical core of the EOC may comprise a dielectric material other than silicon dioxide, for example silicon oxynitride. In some implementations, the EOC may couple to an optical waveguide of the chip having an optical core in a layer above the optical core layer of the EOC. In some implementations, deposition methods other than PECVD, such as but not limited to LPVCD, pulsed magnetron sputtering (PMS), and ion-assisted deposition, may be used to form at least one of the first cladding and the optical core of the EOC. In some implementations, the RI of the optical core, e.g. 114, 214, or 550, may vary with the distance from the first cladding layer, e.g., to form a graded-index waveguide. FIG. 7 schematically illustrates an example RI profile 700 of a graded-index EOC waveguide, wherein the RI gradually increases toward a center of the EOC core. In such implementations, the RI difference Δ*n* = (n_{core} - n_{clad}) between an RI value n_{clad} in the cladding layer and a (maximum) RI value *n*_{core} in a middle portion of the core layer may be less than 0.1, e.g., in the 0.01 to 0.001 range. In some implementations, such graded-index core layers may be formed by varying one or more of the RI-affecting deposition parameters during the deposition of the core layer, e.g., 550 (FIG. 5D). In some implementations, such graded-index core layers may result from ion implantation.

According to example embodiments disclosed above, e.g., in the summary section and/or in reference to any one or any combination of some or all of FIGs. 1-7, provided is an apparatus comprising an edge optical coupler (EOC) (e.g. 110, Figs. 1-3; 210, Figs. 4A- 4C; 510, Figs. 5E-5H) integrated with a photonic chip (e.g. 100, FIGs. 1-3; 200, FIGs. 4A, 4B; 600, FIG. 6). The EOC comprises an optical waveguiding core (e.g. 114, FIGs. 1-3; 214, FIGs. 4A, 4B; 560, FIGs. 5E-5H) disposed over a first cladding layer (e.g. 112, FIGs. 1-3; 212, FIGs. 4A, 4B; 525, FIGs. 5E-5H), the first cladding layer configured to guide light of an operating wavelength of the photonic chip along the optical waveguide core, the optical edge coupler having a low refractive index difference between the optical waveguide core and the first cladding layer at the operating wavelength of the photonic chip.

In some implementations, the refractive index difference between the optical waveguide core and the first cladding layer is no greater than 0.1. In some implementations, the refractive index difference between the optical waveguide core and the first cladding layer is in a range from 0.01 to 0.001.

In any of the above implementations, the optical waveguide core and the first cladding layer may comprise an oxide material. In any of the above implementations, the optical waveguide core may have a height (e.g. 101, FIG. 2; 552, FIG. 5E) in a direction perpendicular to the first cladding layer greater than the operating wavelength of the photonic chip. In any of the above implementations, the optical waveguide core may be at least 2 µm in height in a direction perpendicular to the first cladding layer.

In any of the above implementations, the EOC may comprise a second cladding layer (e.g., 116, FIGs. 1-3; 216, FIG. 4A; 570, FIGs. 5F, 5H; 580, FIGs. 5G, 5H) disposed over the optical waveguide core.

In any of the above implementations, the photonic chip may comprise a planar substrate (e.g., 122, FIGs. 1-3; 222, FIG. 4; 510, FIGs. 5A-5H) one or more optical devices (e.g. 154, FIG. 1) disposed along the planar substrate, and the optical edge coupler optically connected to the one or more optical devices. The photonic chip may comprise a layer of insulating material (e.g.. 124, FIGs. 1-3; 520 FIGs. 5A-5H) disposed over the substrate, and a device layer (e.g. 126, FIG. 3; 226, FIG. 4) disposed over the insulating layer in a part of the photonic chip (e.g. 150, FIG. 3; 250, FIG. 4A) absent the optical edge coupler, and wherein the first cladding layer is disposed upon the insulating layer.

In any of the above implementations, the first cladding layer and the optical core comprise an oxide of silicon. In any of the above implementations, the first cladding layer may comprise silicon dioxide, and the optical waveguide core may comprise one of silicon dioxide and silicon oxynitride. In any of the above implementations, the first cladding layer may comprise silicon dioxide, and the optical waveguide core may comprise silicon dioxide doped with Ge, N, or Al.

In any of the above implementations, a second cladding layer (e.g. 116, FIGs. 1-3; 216, FIG. 4A; 570, FIGs. 5F, 5H; 50, FIGs. 5G, 5H) may be disposed over the optical waveguide core. The second cladding layer may comprise, e.g., one of silicon dioxide and optical epoxy (e.g. 180, FIG. 3; 580, FIGs. 5G, 5H).

In any of the above implementations, the optical waveguide core may have a height in a range from about 2 microns to about 15 microns.

According to example embodiments disclosed above, e.g., in the summary section and/or in reference to any one or any combination of some or all of FIGs. 1-7, provided is an apparatus comprising a PIC (e.g. 100, FIGs. 1-3; 200, FIGs. 4A, 4B). The PIC comprises one or more optical devices (e.g. 154, FIG. 1) and an edge optical coupler (EOC) (e.g. 110, Figs. 1-3; 210, Figs. 4A- 4C; 510, Figs. 5F-5H) configured to optically couple the PIC to an optical fiber (e.g. 160, FIG. 3). The EOC comprises an optical waveguiding core (e.g. 114, FIGs. 1-3; 214, FIGs. 4A, 4B; 560, FIGs. 5E-5H) disposed over a first cladding layer (e.g. 112, FIGs. 1-3; 212, FIGs. 4A, 4B; 525, FIGs. 5E-5H), the first cladding layer configured to guide light of an operating wavelength of the photonic chip along the optical waveguide core, the optical edge coupler having a low refractive index difference between the optical waveguide core and the first cladding layer at the operating wavelength of the photonic chip. In some implementations, both the optical waveguide core and the first cladding layer may comprise an oxide material. In some implementations, the refractive index difference between the optical waveguide core and the first cladding layer is less than 0.1.

According to a related example embodiment disclosed above, e.g., in the summary section and/or in reference to any one or any combination of some or all of FIGs. 1-7, provided is a method comprising fabricating an EOC (e.g. 110, Figs. 1-3; 210, Figs. 4A- 4B; 510, Figs. 5E-5H) in a chip-edge portion (e.g. 610, FIG. 6) of a photonic chip wafer (e.g. 666, FIG. 6), the fabricating comprising disposing a higher-index optical core layer (e.g. 550) over a lower-index optical cladding layer (e.g. 112, 212, 525), such that a difference in refractive index between the higher-index core layer and the lower-index cladding layer is less than 0.1. In some implementations of the method, disposing each of the higher-index optical core layer and the lower-index optical cladding layer comprises depositing a silicon oxide comprising material (e.g. doped or undoped SiO2, doped or undoped SiON), further comprising patterning the higher-index optical core layer to form an optical waveguide core (e.g. 114, 214, 560) of the edge optical coupler. In some implementations, the method comprises depositing the silicon oxide comprising material of the optical core layer to a thickness of at least 2 microns.

In some implementations of the method, the photonic chip wafer comprises a waveguiding device layer disposed over a buried oxide (BOX) layer, and the method comprises removing the waveguiding device layer to expose the BOX layer in the chip-edge portion of the wafer. In some implementations of the method, the disposing may comprise depositing the silicon oxide comprising material using one of PECVD and LPCVD, and the method may further comprise adjusting deposition parameters for the optical core layer such as to increase a refractive index of the silicon oxide comprising material being deposited.

Unless explicitly stated otherwise, each numerical value and range in the above description should be interpreted as being approximate as if the word "about" or "approximately" preceded the value or range.

Various modifications of the described embodiments, as well as other embodiments within the scope of the disclosure, which are apparent to persons skilled in the art to which the disclosure pertains are deemed to lie within the principle and scope of the disclosure, e.g., as expressed in the following claims. It is thus intended that the scope of the invention be limited not by this detailed description, but rather by the claims appended hereto.

## Claims

1. An apparatus comprising:
an edge optical coupler configured to optically couple a photonic chip to an optical fiber, the optical edge coupler being integrated with the photonic chip and comprising an optical waveguiding core disposed over a first cladding layer, the first cladding layer configured to guide light of an operating wavelength of the photonic chip along the optical waveguide core, the optical edge coupler having a low refractive index difference between the optical waveguide core and the first cladding layer at the operating wavelength of the photonic chip.

2. The apparatus of claim 1, wherein the refractive index difference between the optical waveguide core and the first cladding layer is no greater than 0.1.

3. The apparatus of claim 1, wherein the optical waveguide core and the first cladding layer comprise an oxide material.

4. The apparatus of claim 1, wherein the optical waveguide core has a height in a direction perpendicular to the first cladding layer greater than the operating wavelength of the photonic chip.

5. The apparatus of claim 1, wherein the optical waveguide core is at least 2 µm in height in a direction perpendicular to the first cladding layer.

6. The apparatus of claim 1, comprising a second cladding layer disposed over the optical waveguide core.

7. The apparatus of claim 1, wherein the photonic chip comprises a planar substrate, a layer of insulating material disposed over the substrate, a semiconductor layer disposed over the insulating layer in a part of the photonic chip absent the optical edge coupler, and one or more optical devices disposed along the planar substrate with the optical edge coupler optically connected to the one or more optical devices, wherein the first cladding layer is disposed upon the insulating layer.

8. The apparatus of claim 7, wherein the first cladding layer and the optical waveguide core comprise an oxide of silicon.

9. The apparatus of claim 7, wherein the first cladding layer comprises silicon dioxide, and the optical waveguide core comprises one of silicon dioxide and silicon oxynitride.

10. The apparatus of claim 8, further comprising a second cladding layer disposed over the optical waveguide core, the second cladding layer comprising one of silicon dioxide and optical epoxy.

11. The apparatus of claim 10, wherein the optical waveguide core has a height in a range from about 2 microns to about 15 microns.

12. A method comprising:
fabricating an edge optical coupler (EOC) in a chip-edge portion of a photonic chip wafer, the fabricating comprising disposing a higher-index optical core layer over a lower-index optical cladding layer, such that a difference in refractive index between the higher-index core layer and the lower-index cladding layer is less than 0.1.

13. The method of claim 12, wherein disposing each of the higher-index optical core layer and the lower-index optical cladding layer comprises depositing a silicon oxide comprising material, further comprising patterning the higher-index optical core layer to form an optical waveguide core of the edge optical coupler.

14. The method of claim 12, wherein the photonic chip wafer comprises a waveguiding device layer disposed over a buried oxide (BOX) layer, the method further comprising removing the waveguiding device layer to expose the BOX layer in the chip-edge portion of the wafer.

15. The method of claim 13, wherein the disposing comprises depositing the silicon oxide comprising material using one of Plasma Enhanced Chemical Vapor Deposition (PECVD) and Low-Pressure Chemical Vapor Deposition (LPCVD), and adjusting one or more deposition parameters for the optical core layer such as to increase a refractive index of the silicon oxide comprising material being deposited.
